# EUROPEAN PATENT APPLICATION

(11) **EP 4 544 957 A1**
(43) Date of publication of application: **30.04.2025**
(21) Application number: 23205707.5
(22) Date of filing: 25.10.2023
(51) Int. Cl.: A46B 7/04, A46B 9/04, A61C 17/22

(54) **CONNECTOR FOR A PERSONAL CARE IMPLEMENT, HANDLE AND PERSONAL CARE IMPLEMENT**

(71) Applicant: The Gillette Company LLC, Boston, Massachusetts 02127 (US)
(72) Inventor: MÜLLER, Sven, 61476 Kronberg (DE); KRAFT, Viktor, 61476 Kronberg (DE); GÖTZ, Nicolas, 61476 Kronberg (DE); MOOG, Christoph, 61476 Kronberg (DE)
(74) Representative: P&G Patent Germany

(57) **Abstract**

A connector for repeatedly attaching and detaching a head to and from a handle of a personal care implement comprises a snap-fit element. The snap-fit element has a base portion and a resilient arm extending from said base portion. The resilient arm is made from a polymer material having an e-modulus from about 5 N/mm² to about 15 N/mm², preferably about 10 N/mm².

## Description

### FIELD OF THE INVENTION

The present disclosure is concerned with a connector for repeatedly attaching and detaching a head to and from a handle of a personal care implement. The present disclosure is further concerned with a handle of a personal care implement, the handle comprising such connector, and a personal care implement comprising such handle and a head.

### BACKGROUND OF THE INVENTION

Heads and handles for personal care implements, like manual or electrical/battery driven toothbrushes, are well known in the art. Generally, tufts of bristles or other cleaning elements for cleaning teeth and soft tissue in the mouth are attached to a bristle carrier or mounting surface of the brush head intended for insertion into a user's oral cavity. The handle is usually attached to the head, which handle is held by a user during brushing. Usually, heads of manual toothbrushes are permanently connected to the handle, e.g. by injection molding the bristle carrier, the handle, a neck connecting the head and the handle, in one injection molding step. After the usual lifetime of a toothbrush, i.e. after about three months of usage, the toothbrush is discarded. In order to provide environmentally friendly/sustainable manual toothbrushes generating less waste when the brushes are discarded, manual toothbrushes are known comprising heads or head refills being exchangeable, i.e. repeatedly attachable to and detachable from the handle. Instead of buying a completely new toothbrush, consumers can re-use the handle and buy a new head refill only. Such refills are usually less expensive and generate less waste than a conventional manual toothbrush.

For example, manual toothbrushes are known comprising a handle to which a replaceable head is connected. The handle is provided with a cavity within which the head is insertable. To provide sufficiently strong connection between the head and the handle, the brush head is formed with a neck having a coupling anchor with a number of recesses for engaging in a complementary engaging mechanism within a collar of the handle.

However, such anchor/engaging mechanism has a relatively complex outer geometry which is not easy to clean after usage of the toothbrush. Toothpaste and slurry may accumulate in recesses of the anchor/engaging mechanism and may prevent the brush head to be accurately attachable to the handle. Further, such engaging mechanism does not provide the toothbrush with sufficient anti-twist protection for the brush head on the handle during brushing.

Further, connector solutions featuring small plastic hooks that interact with respective apertures are known. However, these plastic hooks relax over time and the user needs to actively push back the hooks in parallel to pulling the refill in order to remove the brush head from the handle. Such connector solution is neither intuitive nor consumer friendly. Furthermore, such connectors are not easy to clean. Moreover, engaging parts provided in the brush refill are necessary which results in additional manufacturing costs and complexity.

If the head is not accurately attached/fixed on the handle, for example because the connector is not sufficiently clean as slurry and toothpaste accumulated in small recesses, and/or if the brush head twists away during brushing, the maneuverability of the oral care implement during brushing is poor, impeding the user reaching all areas in the oral cavity. Consequently, maneuverability of the overall brush may not be sufficient. However, in order to achieve and preserve good oral health, and to prevent gingivitis, it is important to clean teeth and gums thoroughly, in particular in hard to reach areas, e. g. in the region of the back molars. Further, gaps between teeth and periodontium, the so called gingival groove has to be thoroughly cleaned which requires a good and well-coordinated brushing technique, which may not be achievable by using the above-mentioned manual toothbrushes.

It is an object of the present disclosure to provide a connector, a handle comprising such connector and a personal care implement which overcomes at least one of the above-mentioned drawbacks, in particular a personal care implement which comprises an exchangeable head which is sufficiently strong connectable to a handle and which does not rotate/twist aside during use. Further, it is an object of the present disclosure to provide a connector which is relatively easy to manufacture at low costs while providing superior resilience, anti-twist protection and reliable fixation of the head to the handle, even after a longer period of use.

### SUMMARY OF THE INVENTION

In accordance with one aspect a connector for repeatedly attaching and detaching a head to and from a handle of a personal care implement is provided. The connector comprises a snap-fit element. The snap-fit element has a base portion and a resilient arm extending from said base portion. The resilient arm is made from a polymer material having an e-modulus from about 5 N/mm² to about 15 N/mm², preferably about 10 N/mm².

In accordance with one aspect, a handle for a personal care implement is provided, the handle comprising such connector.

In accordance with one aspect, a personal care implement is provided, the implement comprising a head and a handle according to the present disclosure, the head being repeatedly attachable to and detachable from the handle via a connector according to the present disclosure.

### BRIEF DESCRIPTION OF THE DRAWINGS

The invention is described in more detail below with reference to various embodiments and figures, wherein:
Fig. 1 shows a perspective view of an example embodiment of a personal care implement according to the present disclosure, the personal care implement comprising a head, a handle and a connector;
Fig. 2 shows a perspective view of a first connector embodiment;
Fig. 3 shows a schematic side view of the connector according to Fig. 2;
Fig. 4 shows a schematic top-down view of the connector according to Fig. 2;
Fig. 5 shows a schematic view of the connector according to Fig. 2, inserted into a hollow portion of a head;
Fig. 6 shows a perspective view of a second connector embodiment;
Fig. 7 shows a side view of the second connector embodiment according to Fig. 6;
Fig. 8 shows a side view of a third connector embodiment;
Fig. 9 shows a side view of a fourth connector embodiment;
Fig. 10 shows a perspective view of a fifth connector embodiment;
Fig. 11 shows a side view of the fifth connector embodiment according to Fig. 10;
Fig. 12 shows a side view of a sixth connector embodiment;
Fig. 13 shows a side view of a seventh connector embodiment;
Fig. 14 shows a perspective view of an eighth connector embodiment; and
Fig. 15 shows a side view of a nineth connector embodiment.

### DETAILED DESCRIPTION OF THE INVENTION

The personal care implement according to the present disclosure comprises a handle and a head for performing a personal care routine. The head is repeatedly attachable to and detachable from the handle via a connector. The personal care implement according to the present disclosure may be any type of personal care implement, e.g. a wet shaving razor, a trimmer, a nail polisher, or an oral care implement, e.g. a toothbrush, like a manual or battery operated toothbrush. Alternatively, the personal care implement may be an inter-proximal pick, a plaque scraper, a chemistry applicator, or tissue/tongue cleanser.

The head for the personal care implement may be any type of replaceable refill, e.g. a razor cartridge, a trimmer, or an oral-care refill, including but not limited to brush-head refills, interdental or toothpick refills, tongue/tissue-cleaner refills, and chemistry-applicator refills. A brush head may comprise at least one tooth cleaning element, e.g. a tuft of bristles and/or an elastomeric element, fixed to a mounting surface of the head.

The head is repeatedly attachable to and detachable from the handle via the connector. The head of the personal care implement may have a distal end and a proximal end, the proximal end being defined as the end closest to the handle. The proximal end of the head may comprise a hollow portion for receiving a part of the connector. The hollow portion of the head may have an inner wall with a geometry/contour which may substantially correspond to the outer geometry/contour of the part of the connector to be inserted into the hollow portion of the head.

The connector comprises a snap-fit element for securely locking the head onto the connector by a snap-fit locking mechanism. The snap-fit element comprises a base portion and a resilient arm extending from said base portion. When the head is attached to the connector, the resilient arm is pushed towards the inner wall of the hollow portion of the head. When a head gets attached to the connector, at least a portion of the resilient arm can resiliently engage into a respective recess, e.g. provided in the inner wall of the hollow portion of the head. In the following a radial force is defined by a force applied in a direction being substantially perpendicular to the longitudinal length extension of the connector. Once the head is snap-fitted onto the connector, the head is fixed on the handle/connector in an axial direction. In other words, the head is fixed on the handle until a specific/predetermined pull-off force is applied. The connection between the head and connector is sufficiently strong and stable, enabling well-coordinated personal care routines, e.g. brushing or shaving techniques, without having the head loosened from the handle. Further, the snap-fit element allows the head to be easily attachable to and detachable from the handle. The base portion may comprise a flattening portion from which the resilient arm extends.

Also, the snap-fit element serves as an anti-twist protection means. If lateral forces are applied to the head of the personal care implement, then the asymmetric structure/geometry of the snap-fit element prevents the head from rotating in a lateral direction in relation to the handle. Such connector provides sufficiently strong connection and stability between the head and the handle, e.g. to enable a user to perform an oral care routine or shaving/trimming action.

The connector may be unitarily formed as one piece which cannot be separated without destroying the connector. This means that the connector can be made in a single injection molding step, thereby simplifying manufacturing and reducing production costs.

According to the present disclosure, the connector is made from a polymer material, having an e-modulus from about 5 N/mm² to about 15 N/mm², or about 10 N/mm². Such material provides the snap-fit element and the resilient arm with the right amount of elasticity, enabling sufficient fixation and stability of the head during the use of the personal care implement, while allowing for easy detachment of the head from the handle after use. Also, a resilient arm made from such material provides sufficient haptic feedback , when the head gets attached to the connector. The material may be selected from the list comprising: PBT (polybutylene terephthalate), PET (polyethylene terephthalate), POM (polyoxymethylene), PA (polyamide, e.g. PA6, PA6.6, PA12), PP (polypropylene), PK (polyketone), PS (polystyrene), LCP (liquid crystal polymer), PC (polycarbonates), ABS (acrylonitrile-butadiene-styrene), PPS (polyphenylene sulfide), PCR (post-consumer recycled material), and any mixtures thereof. Such materials allow for the right amount of deformation during an attachment/detachment action. In addition, fillers may be added to said materials. Fillers may be selected from the list comprising. Glass, carbon, and/or minerals. The fillers/filler particles may have the form of fibers, spheres and/or balls. Fillers may be added to the material up to 60 wt%, or about 5 wt% to about 60 wt%, thereby adjusting the desired stiffness and elasticity of the connector. Generally, stiffness and elasticity of the material used for the manufacture of the connector according to the present disclosure can be adjusted by selecting the appropriate plastic material, filler material, filler geometry, filler amount, and filler-matrix connection. Surprisingly, it has been found out that the use of PBT material comprising about 30 wt% glass fibers provides superior elastic properties for connectors discussed above. Alternatively, any of the materials listed above may be used, the material comprising about 5 wt% to about 60 wt% glass fibers and/or minerals to reinforce the material composition.

The resilient arm may have a first section and a second section, wherein the first section may have the form of a semi-sphere, and the second section may be a bridge connecting the semi-sphere with the base portion. The bridge may apply a force onto the semi-sphere in a substantially outward (i.e. radial) direction, i.e. in a direction substantially towards an outer lateral surface of the connector. When the head is attached to the connector, the bridge pushes the semi-sphere towards the inner wall of the hollow portion of the head. When a head gets attached to the connector, the semi-sphere can resiliently engage into a respective recess, e.g. provided in the inner wall of the hollow portion of the head. In other words, the bridge may act as a spring, applying a force onto the semi-sphere, pushing the semi-sphere outwards so that the semi-sphere can engage into a corresponding recess provided in the inner wall of the head.

The semi-sphere of the snap-fit element may have a diameter from about 1 mm to about 5 mm, or from about 2 mm to about 4 mm, thereby providing sufficiently small dimensions while enabling good retention.

The snap-fit element may comprise a further, i.e. a second resilient bridge arranged opposite the other bridge and connects the first section/semi-sphere with the base portion. The bridge, further/second bridge and semi-sphere may form together an elastic membrane-like structure. Such elastic membrane-like structure may provide the connector performing the snap-locking mechanism with more/increased stability with less relaxation over time. The second bridge can further adjust flexibility of the snap-fit element and bending stiffness thereof.

The resilient arm/bridge of the snap-fit element may have a thickness from about 0.3 mm to about 1.5 mm, or from about 0.6 mm to about 1.2 mm. Surprisingly, it has been found out that for the use of personal care implements, a resilient arm/bridge having such dimensions, and being made from a plastic material having an e-modulus from about 5 N/mm² to about 15 N/mm², or about 10 N/mm², provides optimized elasticity of the snap-fit element.

The resilient arm/bridge of the snap-fit element may extend from the base portion by an angle of about 10° to about 30°, or from about 20° to about 25°. Further, the bridge may be curved. By adjusting said angle and/or curvature the elasticity of the bridge can be further adjusted.

The connector unitarily formed as one piece may comprise a first substantially cylindrical section and a second substantially cylindrical section, wherein the first and the second cylindrical sections are connected by an intermediate section. The intermediate section may comprise the snap-fit element according to the present disclosure. The first substantially cylindrical section, the intermediate section and the second substantially cylindrical section may be arranged in consecutive order and define a longitudinal length extension of the connector.

A substantially cylindrical section is defined by a three-dimensional body having a longitudinal length extension and a cross-sectional area extending substantially perpendicular to the longitudinal length extension. The cross-sectional area has a shape being substantially constant along the longitudinal length extension. Since the connector may be manufactured by an injection molding process, a substantially cylindrical section also comprises sections/bodies which have a draft angle of up to 10°. In other words, a substantially cylindrical section also comprises a section/body which tapers towards a proximal end which is closest to the head once the head is attached to the connector. Also, the other substantially cylindrical section may taper to the distal end closest to the handle.

The cross-sectional area of the first and/or second substantially cylindrical section may have any shape, for example substantially circular, ellipsoid, rectangular, semi-circular, circular with a flattening portion, convex or concave. The cross-sectional area may have the shape of a polygon, for example of a square or triangle. Such geometry provides a robust and simple structure which is easy to clean after usage of the personal care implement. Further, since the outer geometry is relatively simple, such connector can be manufactured in a cost-efficient manner.

The first and the second substantially cylindrical sections of the connector may be placed off-center with respect to the longitudinal length extension of the connector, thereby providing enhanced anti-twist protection, preventing the head from rotating in a lateral direction if lateral forces are applied to the head, e.g. during a manual brushing action applying the so-called "bass" brushing method.

In other words, the first and the second substantially cylindrical sections may have a first and a second longitudinal central axis, respectively, which are defined as the symmetry axis of the first and the second substantially cylindrical sections. The first and the second substantially cylindrical sections may be placed/arranged with respect to each other so that the first longitudinal central axis of the first cylindrical section is located off-center with respect to the second longitudinal central axis of the second cylindrical section by about 1 mm to about 2.5 mm, or by about 1.5 mm to about 2 mm. In other words, the center of the first substantially cylindrical section is offset/eccentric from the longitudinal central axis of the second substantially cylindrical section by a distance of about 1 mm to about 2.5 mm, or of about 1.5 mm to about 2 mm.

Such connector may be easy to manufacture, e.g. by injection molding, and provides sufficient torsional stability for the personal care implement if lateral forces are applied onto the head.

Also, the eccentric arrangement/off-center positioning of the substantially cylindrical sections of the connector enables precise positioning of the brush head onto the handle. The geometric position of the head can be clearly defined. If the handle comprises the connector, the eccentric/off center arrangement of the two substantially cylindrical sections act as a guidance element when a user attaches the head to the handle. In other words, the two substantially cylindrical sections allow for accurate fitting between the head and the handle.

The first substantially cylindrical section may have a cross-sectional area being smaller than the cross-sectional area of the second substantially cylindrical section. For example, the first substantially cylindrical section to be inserted into a hollow portion at the proximal end of the head, may have a substantially circular cross-sectional area with a diameter of about 4 mm to about 6 mm, preferably about 5 mm, while the second substantially cylindrical section to be inserted into a hollow portion at the proximal end of the handle, may have a substantially circular cross-sectional area with a diameter of about 8 mm to about 10 mm, preferably about 9 mm, while.

The first substantially cylindrical section, the second substantially cylindrical section and/or the intermediate section may comprise a flattening portion extending along the length extension of the connector. Such flattening portion may provide the personal care implement with additional anti-twist protection. If lateral forces are applied onto the head, then the likelihood that the head rotates with respect to the handle is even less likely.

The first and the second substantially cylindrical sections have a first and a second outer surface, respectively, and the first and the second substantially cylindrical sections may be arranged with respect to each other so that a part of the first outer surface and a part the second outer surface are substantially in straight alignment. The flattening portion, optionally comprising the snap-fit element, may be arranged opposite the first and second outer surfaces being substantially in straight alignment. Such connector has an easy to clean outer geometry. The connector is robust, easy to use, and can be manufactured in a cost-efficient manner.

The handle of the personal care implement has a distal end and a proximal end, the proximal end being opposite the distal end and closest to the head when the head is attached to the handle. The proximal end of the handle may comprise a hollow portion/recess into which a part of the second substantially cylindrical section is fixed, e.g. by a press-fitting process and/or gluing. If the connector forms a part of the handle, the connector can be used over an extended/longer period of time. The head having a relatively simple structure and being relatively cheap as compared to the handle can be replaced frequently, e.g. every three months. A new head refill can be purchased at relatively low costs.

The proximal end of the handle may comprise a chamfered surface. Such chamfered surface may provide the personal care implement with additional anti-twist protection during use. The chamfered surface and a cross-sectional area of the handle may define an angle α from about 15° to about 30°, or from about 18° to about 28°, or about 25°. Said cross-sectional area is defined by an area extends substantially perpendicular to the longitudinal length extension of the handle. Surprisingly, it has been found out that such angled/chamfered surface provides superior anti-twist protection. Furthermore, when the head is removed from the handle, the angled/chamfered surface allows for draining-off fluids, like toothpaste slurry and saliva, after use of the personal care implement, thereby preventing accumulation of such fluids over time.

To allow sufficiently good fitting of the brush head on the connector if production tolerances occur, the inner wall of the hollow portion of the head may comprise at least one rib, or two ribs being arranged opposite each other, for precisely adjusting the head on the connector/handle. Furthermore, the at least one rib may prevent compression of air in the hollow portion of the head which could act like a spring or as additional resistance while snapping the head on the connector/handle.

At least a portion of the head, e. g. the neck/shaft and the bristle carrier may be at least partially made from a material having a density from about 0.5 g/cm³ to about 1.2 g/cm³, or from about 0.7 g/cm³ to about 1.0 g/cm³, or about 0.9 g/cm³. For example, the head may be injection molded from a thermoplastic polymer, e.g. polypropylene having a density of about 0.9 g/cm³. In contrast to the head, the handle may be at least partially made from a material having a significant higher density, i.e. a density from about 2.1 g/cm³ to about 3.1 g/cm³, or from about 2.3 g/cm³ to about 2.8 g/cm³, or from about 2.5 g/cm³ to about 2.7 g/cm³.

The weight of the handle material may be relatively high to provide a user with high-quality perception and comfortable feeling during use of the personal care implement. Usually users are accustomed that products, in particular in the personal care or health sector, have a specific weight that guarantees high product quality and provides comfortable feeling during use of the product. Consequently, such personal care implement provides such superior product quality perception.

Further, since the material of the handle may have a higher density than the material of the head, the center of mass/center of gravity lies within the handle (even if the head is loaded with, e.g. toothpaste) which enables users to perform a well-coordinated brushing technique/usage with improved sensory feeling during use/brushing. The center of gravity provided in the center of the handle may provide a personal care implement which is better balanced and does not tip over / does not get head loaded once toothpaste or other fluids are applied onto the head. When users apply different grip styles/brushing techniques, the personal care implement according to the present disclosure has the advantage that the center of gravity is in or very close to the pivot point of the wrist joint. A balanced implement is easier to control, e.g. in the mouth, thereby allowing more precise and accurate brushing movements which enables better cleaning.

While the relatively expensive handle of the personal care implement may be adapted for use over a longer period of time as compared to common implements, e.g. manual toothbrushes which are discarded after about three months of use, the relatively cheap brush refill can be exchanged on a regular basis, e.g. after about three months. This provides a cost-efficient and environmentally sustainable high quality personal care implement with improved handling properties.

In the past, it has been seen that after use of the personal/oral care implement the user usually stores the wet implement, e.g. in a toothbrush beaker for drying. However, in a classical toothbrush beaker, drained fluids get collected and accumulated at the bottom of the beaker, and, the fluids stay in contact with the toothbrush for a longer period of time. Since the beaker is open on one side only, the toothbrush dries relatively slowly. Bacteria living in wet conditions/in a wet environment can grow quickly, contaminate the toothbrush and finally render the brush unhygienic. Consequently, there exists a need for a solution for hygienically storing and drying a toothbrush, thereby enabling remaining water, toothpaste slurry and saliva to drain off from the brush. The brush shall dry quickly thereby inhibiting bacterial growth.

The material of the head may be made of a non-magnetic or non-ferromagnetic material, while the material of the handle may be made from a magnetic and/or ferromagnetic material. Magnetic/ferromagnetic material possesses not only a relatively high density, and, thus, a relatively heavy weight, which may provide the personal care implement with the above-mentioned benefits, but the magnetic/ferromagnetic material also enables the personal care implement to be magnetically attachable to a magnetic holder. The magnetic/ferromagnetic material of the handle may allow for hygienic storage of the personal care implement. If the personal care implement is magnetically attached to a magnetic holder, remaining liquids, e.-g. water, toothpaste slurry and saliva can drain off from the implement. The personal care implement can dry relatively quickly. Consequently, bacteria growth can significantly be reduced, thereby rendering the personal care implement more hygienic. The implement is exposed to wet conditions over a significantly shorter period of time.

For example, the magnetic holder may have the form of a flat disk attachable to a wall. Such flat disk may represent an easy to clean surface. Further, a user just needs to bring the personal care implement in close proximity to the magnetic holder, and then the personal care implement gets attached automatically. No precise positioning or threading as in common (toothbrush) holder is required. Since the magnetic properties are merely provided in the handle, and not in the head, the head portion cannot accidentally be attached to the magnetic holder, thereby reducing the risk that the magnetic holder gets soiled.

If the head of the personal care implement is a toothbrush head, then tooth cleaning elements, e.g. bundle of filaments forming one or a plurality of tufts, may be attached to the head by means of a hot tufting process. One method of manufacturing the head with tufts of filaments embedded in the head may comprise the following steps: In a first step, tufts are formed by providing a desired amount of filaments. In a second step, the tufts are placed into a mold cavity so that ends of the filaments which are supposed to be attached to the head extend into said cavity. The opposite ends of the filaments not extending into said cavity may be either end-rounded or non-end-rounded. For example, the filaments may be not end-rounded in case the filaments are tapered filaments having a pointed tip. In a third step the head is formed around the ends of the filaments extending into the mold cavity by an injection molding process, thereby anchoring the tufts in the head. Alternatively, the tufts may be anchored by forming a first part of the head - a so called "sealplate" - around the ends of the filaments extending into the mold cavity by an injection molding process before the remaining part of the oral care implement is formed. Before starting the injection molding process the ends of the tufts extending into the mold cavity may be optionally melted or fusion-bonded to join the filaments together in a fused mass or ball so that the fused masses or balls are located within the cavity. The tufts may be held in the mold cavity by a mold bar having blind holes that correspond to the desired position of the tufts on the finished head of the oral care implement. In other words, the tufts attached to the head by means of a hot tufting process are not doubled over a middle portion along their length and are not mounted in the head by using an anchor/staple. The tufts are mounted on the head by means of an anchor-free tufting process.

Alternatively, the head for the oral care implement may be provided with a bristle carrier having at least one tuft hole, e.g. a blind-end bore. A tuft comprising a plurality of filaments may be fixed/anchored in said tuft hole by a stapling process/anchor tufting method. This means, that the filaments of the tuft are bent/folded around an anchor, e.g. an anchor wire or anchor plate, for example made of metal, in a substantially U-shaped manner. The filaments together with the anchor are pushed into the tuft hole so that the anchor penetrates into opposing side walls of the tuft hole thereby anchoring/fixing/fastening the filaments to the bristle carrier. The anchor may be fixed in opposing side walls by positive and frictional engagement. In case the tuft hole is a blind-end bore, the anchor holds the filaments against a bottom of the bore. In other words, the anchor may lie over the U-shaped bend in a substantially perpendicular manner. Since the filaments of the tuft are bent around the anchor in a substantially U-shaped configuration, a first limb and a second limb of each filament extend from the bristle carrier in a filament direction. Filament types which can be used/are suitable for usage in a stapling process are also called "two-sided filaments". Heads for oral care implements which are manufactured by a stapling process can be provided in a relatively low-cost and time-efficient manner.

The following is a non-limiting discussion of example embodiments of personal care implements and parts thereof in accordance with the present disclosure, where reference to the Figures is made.

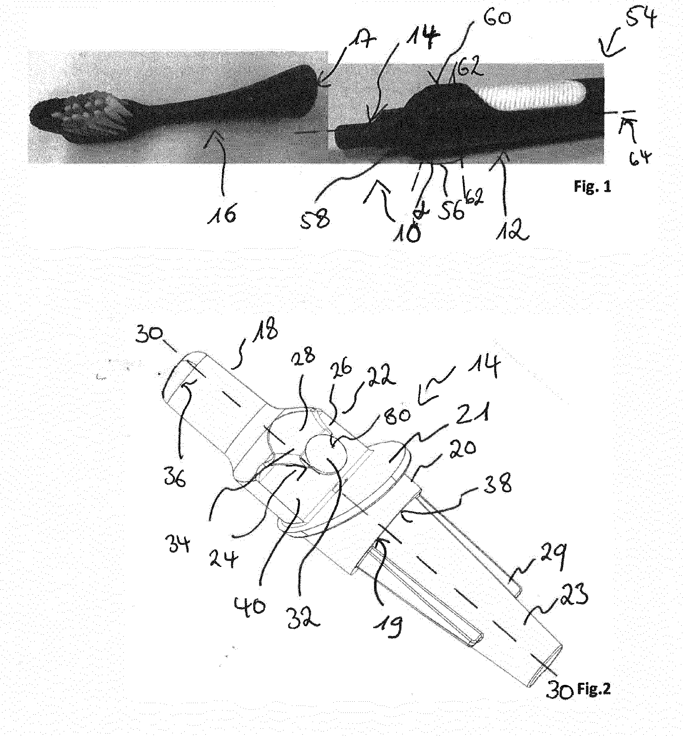

Fig. 1 shows a personal care implement 10, in this specific embodiment a manual toothbrush 10. The personal care implement 10 comprises a handle 12 to which a connector 14 is attached, and a head 16. The head 16, in the present example a toothbrush head 16, is repeatedly attachable to and detachable from the handle 12 via connector 14.

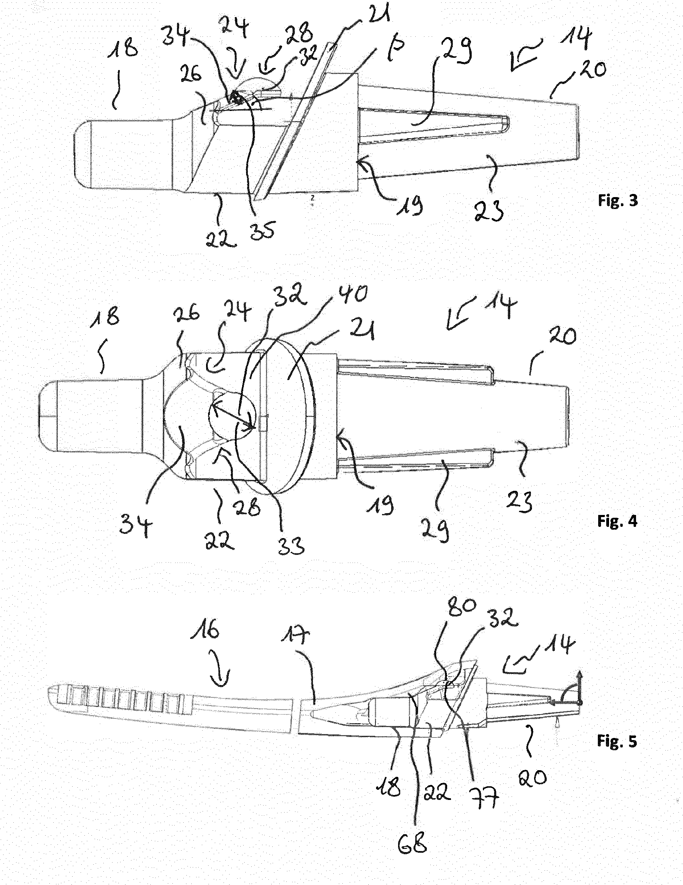

Figs. 2 to 4 show a perspective view, a side view, and a top-down view of a first embodiment of a connector 14 according to the present disclosure. Fig. 5 shows the first connector embodiment 14 inserted into a hollow portion 17 of the head 16. The first and any subsequently discussed connector embodiments are unitarily formed as one piece, for example by means of injection molding. The connector 14 may be made from a plastic material, e.g. from a polymer material, having an e-modulus from about 5 N/mm² to about 15 N/mm², or about 10 N/mm².

Each of the connector embodiments discussed herein comprise a first substantially cylindrical section 18, a second substantially cylindrical section 20, and an intermediate section 22 connecting the first and the second cylindrical sections 18, 20. The first substantially cylindrical section 18, the intermediate section 22 and the second substantially cylindrical sections 20 are arranged in consecutive order and define together a longitudinal length extension 30 of connector 14. The first substantially cylindrical section 18 and the second substantially cylindrical section 20 are placed off-center with respect to the longitudinal length extension 30 of the connector 14.

The first substantially cylindrical section 18 and the second substantially cylindrical section 20 have each a length extension and a cross-sectional area 36, 38 extending substantially perpendicular to the length extension. The cross-sectional area 36 of the first substantially cylindrical section 18 and the second cross-sectional area 38 of the second substantially cylindrical section 20 is substantially circular. The first substantially cylindrical section 18 has a cross-sectional area 36 being smaller than the cross-sectional area 38 of the second substantially cylindrical section 20. The first cross-sectional area 36 may have a diameter of about 4 mm to about 6 mm, or about 5 mm, while the second cross-sectional area 38 may have a diameter of about 8 mm to about 10 mm, or about 9 mm. The first and the second substantially cylindrical sections 18, 20 may be arranged with respect to each other so that a part of the outer lateral surface is substantially in straight alignment to provide anti-twist protection.

An elongated extension 23 may be arranged at a bottom 19 of the second substantially cylindrical section 20. The elongated extension 23 enables secure attachment of the connector 14 within the handle 12. The elongated extension 23 may have a cross-sectional area being smaller than the cross-sectional area of the second substantially cylindrical section 20. Said cross-sectional area of the elongated extension may taper over its length extension in a direction toward the end of the connector to be inserted into handle 12. Further, the elongated extension 23 - as shown in the first connector embodiment - may comprise ribs 29 which act as an orientation feature during insertion of the connector into a hollow portion of the handle, and anti-twist protection means.

As shown in Fig. 1, the handle 12 of the personal care implement 10 has a distal end 54 and a proximal end 56, the proximal end 56 being closest to the head 16 attachable to the handle 12. The proximal end 56 of handle 12 comprises a hollow portion/recess into which at least a portion of the second substantially cylindrical section 20 of the connector 14 is fixed, e.g. by a press-fitting process and/or gluing.

As illustrated in Fig. 1, the proximal end 56 of the handle 12 comprises a chamfered surface 60. The cross-sectional area 62 extending substantially perpendicular to the longitudinal length extension of the handle and the chamfered surface 60 may define an angle α from about 15° to about 30°, or from about 18° to about 28°, or about 25°.

Between intermediate section 22 and second substantially cylindrical section 20, a slanted plain 22 having a cross sectional area extending beyond the cross-sectional area of both, the intermediate section 22 and second substantially cylindrical section 20, is arranged. Slanted plain 22 acts as a stop-surface when second substantially cylindrical section 20 is inserted into the hollow portion/recess in the handle 12, e.g. by press-fitting and/or gluing.

In each of the connector embodiments discussed herein, the intermediate section 22 comprises a snap-fit element 24 having a base portion 26 and a resilient arm 28 extending from the base portion 26. The resilient arm 28 has a first section 32 and a second section 34, the first section 32 having the form of a semi-sphere 32, and the second section 34 being a bridge 34 connecting the first section/semi-sphere 32 with the base portion 26. As the bridge 34 is made from a resilient material, the bridge 34 applies a force onto the first section/semi-sphere 32 in an outward direction/towards an outer lateral surface 80 of the connector 14. In other words, if the head 16 is snapped onto connector 14, the resilient bridge 34 will push the semi-sphere 32 towards the inner wall 38 of the hollow portion 17 of the head 16. At least a portion of the resilient arm 28, in the present embodiments the semi-sphere 32, can be received by a recess 77 provided in the inner wall 38 of the hollow portion 17 of the head 16. The shape of the recess 77 may correspond to the shape of the semi-sphere 32. In other words, when the head 16 is attached to the handle 12, semi-sphere 32 is pushed outwards by bridge 34 and arrests in the corresponding recess 77 provided in the inner wall 68 of the head 12. The snap-fit element 24 performing a snap-fit locking mechanism provides sufficiently strong connection and stability between head 16 and handle 12 in an axial direction, i.e. along the longitudinal length extension of the connector 14 and personal care implement 10.

To adjust the elasticity of the resilient arm 28, the second section 34/bridge 34 may have a thickness 35 from about 0.3 mm to about 1.5 mm, or from about 0.6 mm to about 1.2 mm. The first section 32/the semi-sphere 32 may have a diameter from about 1 mm to about 5 mm, preferably from about 2 mm to about 4 mm.

The base portion 26 may comprise a flattening portion 40 from which the resilient arm 28 extends. The flattening portion 40 may extend along the length extension of the base portion 26. To further adjust the elasticity of the resilient arm 28/bridge 34, the bridge 34 may extend from the base portion 26 by an angle β of about 10° to about 30°, or from about 20° to about 25°.

The connector 14 and the personal care implement 10 comprising such connector 14, respectively, allow for easy attachment/detachment of the head 16 to and from the handle 12. The user can attach the head 16 to the handle 12 by a simple linear motion. With the specific design of the substantially cylindrical sections 18, 20 being arranged off-center, and the chamfered surface 60 of the handle 12, the head 16 is turned into the right orientation automatically during the attachment motion (within certain tolerances). Therefore, the consumer is not forced to precisely position the head 16 on the handle 12 before snapping it on. Further, the snap-fit element 24 provides a precise fixation of the head 16, and a distinct haptic feedback is given to the consumer that the head 16 is snapped-on securely. The head 16 can be easily removed, without any synchronized action with other elements (e.g. unlocking mechanisms). In addition, the connector 14 can be cleaned easily.

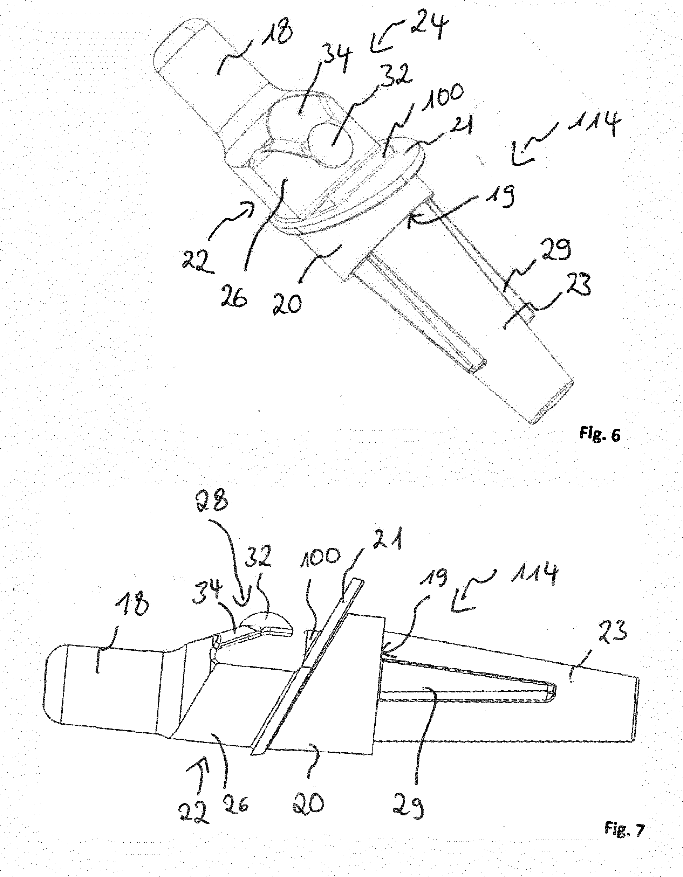

Figs. 6 and 7 show a perspective and side view of a second connector embodiment 114, respectively. Second connector embodiment 114 is similar to first connector embodiment 14, but comprises a wedge 100 as a further anti-twist protection means. The wedge 100 is arranged at the bottom of flattening portion 40 and adjoins slanted plain 21.

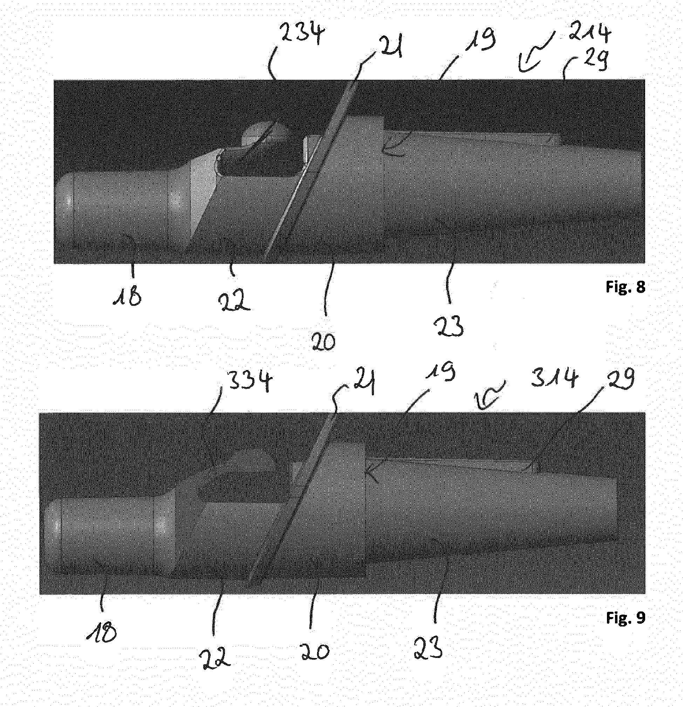

Fig. 8 shows a side view of a third connector embodiment 214. Third connector embodiment 214 is similar to second connector embodiment 114, but comprises a bridge 234 which has a slight concave curvature to adjust flexibility of the snap-fit element 24 and bending stiffness of the bridge 234.

Fig. 9 shows a side view of a fourth connector embodiment 314. Again, fourth connector embodiment 314 is similar to second connector embodiment 114, but comprises a bridge 334 which has a slight convex curvature to adjust flexibility of the snap-fit element 24 and bending stiffness of the bridge 334.

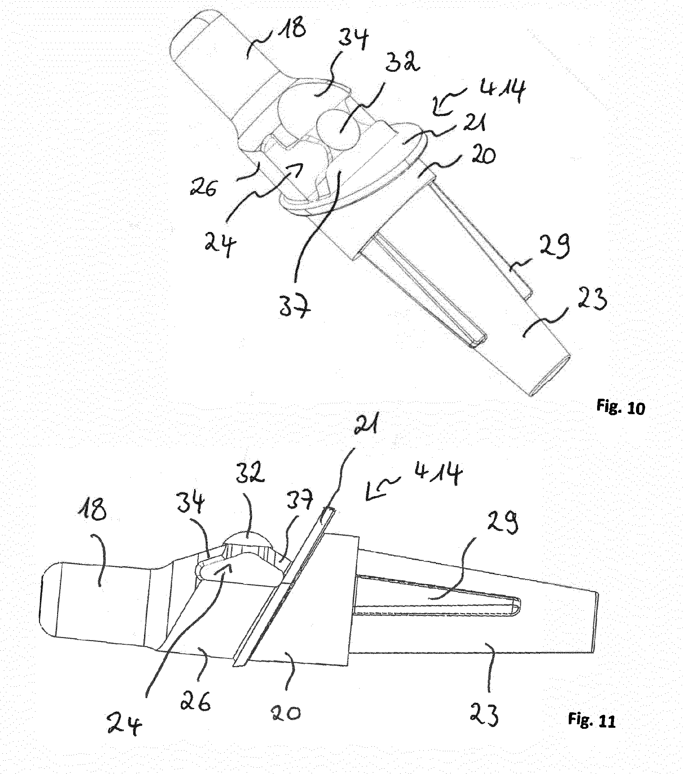

Figs. 10 and 11 show a perspective and side view of a fifth connector embodiment 414, respectively. Fifth connector embodiment 114 is similar to first connector embodiment 14, but the semi-sphere 32 of the snap-fit element 24 is not only connected to the base portion 26 via bridge 34, but also via a second bridge 37 to further adjust flexibility of the snap-fit element 24 and bending stiffness thereof. Second bridge 37 is arranged opposite bridge 34 and connects semi-sphere 32 with base portion 26. Semi-sphere 32, bridge 34 and second resilient bridge 37 connecting the semi-sphere 32 to the base portion 26 form an elastic membrane-like structure.

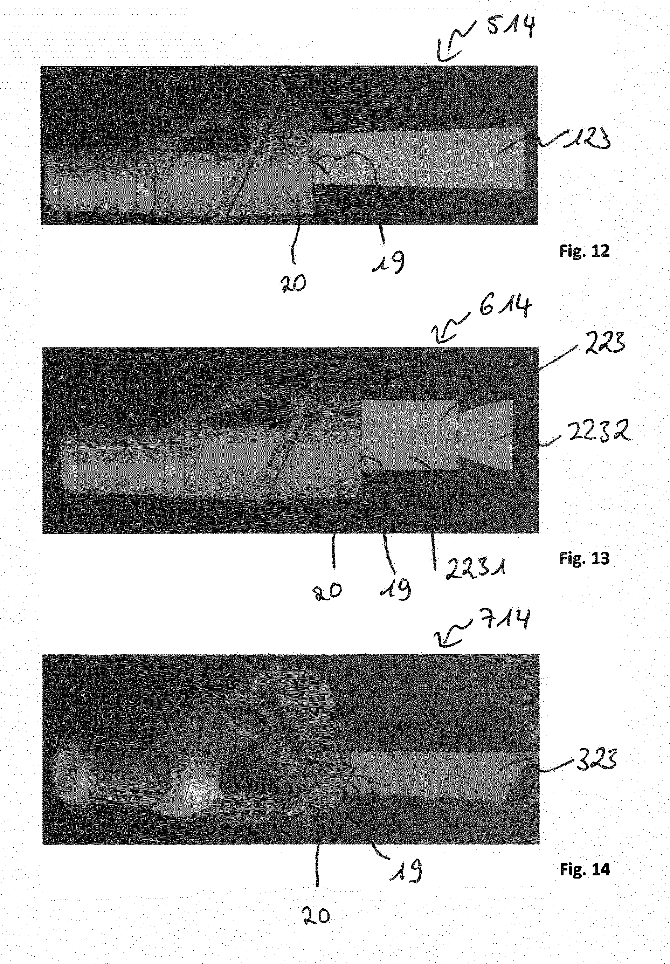

Fig. 12 shows a side view of a sixth connector embodiment 514. Sixth connector embodiment 514 is similar to second connector embodiment 114, but elongated extension 123 arranged at the bottom 19 of the second substantially cylindrical section 20 does not comprise any ribs. In contrast to the elongated extension 23 as shown in Figs. 2 to 7, the cross-sectional area of the elongated extension 123 of the sixth connector embodiment 514 tapers over its length extension towards the bottom 19 of second substantially cylindrical section 20 to increase retention forces when the connector 14 is embedded in the handle 12, e.g. by molding a handle material over a portion of the connector 14.

Fig. 13 shows a side view of a seventh connector embodiment 614. Seventh connector embodiment 614 is similar to second connector embodiment 114, however, elongated extension 223 arranged at the bottom 19 of the second substantially cylindrical section 20 comprises two subsections 2231, 2232: a first sub-section 2231 having a substantially cylindrical shape which does not taper in any direction, and a second sub-section 2232 having a cross sectional area that tapers over its length extension towards first sub-section 2231. First sub-section 2231 is arranged between second substantially cylindrical section 20 and second sub-section 2232 of the elongated extension 223. Again, such geometric structure of elongated extension 223 increases retention forces when the connector 14 is embedded in the handle 12, e.g. by molding a handle material over a portion of the connector 14.

Fig. 14 shows a perspective view of an eighth connector embodiment 714. Eighth connector embodiment 714 is similar to second connector embodiment 114, but elongated extension 323 arranged at the bottom 19 of the second substantially cylindrical section 20 has a cross-sectional shape in the form of a square or rectangle which tapers along the length extension of the elongated extension 323 in a direction towards the bottom 19 of the second substantially cylindrical section 20. Again, such geometric structure of elongated extension 323 increases retention forces when the connector 14 is embedded in the handle 12, e.g. by molding a handle material over a portion of the connector 14.

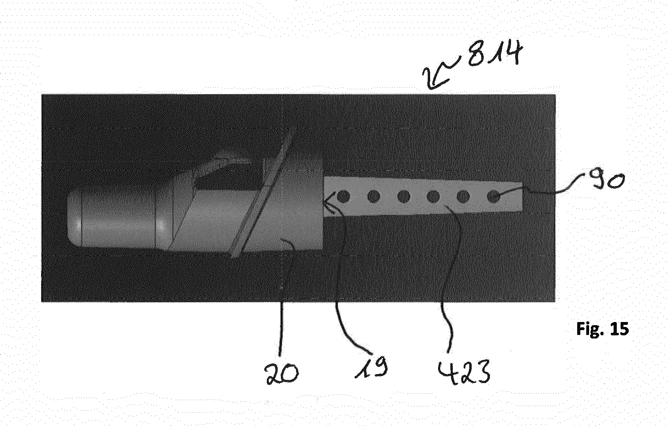

Fig. 15 shows a side view of a nineth connector embodiment 814. Nineth connector embodiment 814 is similar to second connector embodiment 114, but instead of ribs, elongated extension 423 comprises a number of through-holes 90 arranged along the length extension of elongated extension 423. If handle material is injection molded around elongated extension 423, the handle material can flow through the through-holes 90, thereby anchoring connector 814 tightly in the handle material/matrix.

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A connector (14, 114, 214, 314, 414, 514, 614 714, 814) for repeatedly attaching and detaching a head (16) to and from a handle (12) of a personal care implement (10), the connector (14) comprising a snap-fit element (24) having a base portion (26) and a resilient arm (28) extending from said base portion (26), wherein the resilient arm (28) is made from a polymer material having an e-modulus from about 5 N/mm² to about 15 N/mm², preferably about 10 N/mm².

2. A connector (14, 114, 214, 314, 414, 514, 614 714, 814) according to claim 1, wherein the polymer material is selected from the list comprising: polybutylene terephthalate ( PBT), polyethylene terephthalate (PET), polyoxymethylene (POM), polyamide (PA), polyketone (PK), polystyrene (PS), liquid crystal polymer (LCP), polycarbonates (PC), acrylonitrile-butadiene-styrene (ABS), polyphenylene sulfide (PPS), post-consumer recycled material (PCR), and any mixtures thereof.

3. .A connector (14, 114, 214, 314, 414, 514, 614 714, 814) according to any of the preceding claims, wherein the polymer material comprises a filler, the filler being selected from the list comprising. Glass, carbon, and/or minerals.

4. A connector (14, 114, 214, 314, 414, 514, 614 714, 814) according to any of the preceding claims, wherein the resilient arm (26) has a first section (32) and a second section (34), the first section (32) having the form of a semi-sphere (32), and the second section (34) being a bridge (34, 234, 334) connecting the semi-sphere (32) with the base portion (26), the bridge (34, 234, 334) applying a force onto the semi-sphere (32) in a substantially radial direction towards an outer lateral surface (80) of the connector (14, 114, 214, 314, 414, 514, 614 714, 814).

5. The connector (14, 114, 214, 314, 414, 514, 614 714, 814) according to claim 4, wherein a second resilient bridge (37) arranged opposite bridge (34, 234, 334) connects the first section (32) with the base portion (26).

6. The connector (14, 114, 214, 314, 414, 514, 614 714, 814) according to claim 5, wherein the semi-sphere (32) is connected to the base portion (26) via bridge (34, 234, 334) and second resilient bridge (37), thereby forming an elastic membrane-like structure.

7. The connector (14, 114, 214, 314, 414, 514, 614 714, 814) according to any of the preceding claims, wherein the connector (14, 114, 214, 314, 414, 514, 614 714, 814) is unitarily formed as one piece.

8. The connector (14, 114, 214, 314, 414, 514, 614 714, 814) according to any of the preceding claims, wherein the connector (14, 114, 214, 314, 414, 514, 614 714, 814) comprising a first substantially cylindrical section (18), a second substantially cylindrical section (20), and an intermediate section (22) connecting the first and the second cylindrical sections (18, 20), and the intermediate section (22) comprises the snap-fit element (24).

9. The connector (14, 114, 214, 314, 414, 514, 614 714, 814) according to any of the preceding claims, wherein the resilient arm (28) has a thickness (35) from about 0.3 mm to about 1.5 mm, preferably from about 0.6 mm to about 1.2 mm.

10. The connector (14, 114, 214, 314, 414, 514, 614 714, 814) according to any of the preceding claims, wherein the resilient arm (28) extends from the base portion (26) by an angle β of about 10° to about 30°, preferably from about 20° to about 25°.

11. A handle (12) for a personal care implement (10), the handle (12) comprising a connector (14, 114, 214, 314, 414, 514, 614 714, 814) according to any of the preceding claims.

12. The handle (12) according to claim 11, wherein the handle (12) has a distal end (54) and a proximal end (56), the proximal end (56) being closest to a head (16) attachable to the handle (12), the proximal end (56) of the handle (12) comprising a hollow portion (58) into which a portion of the connector (14, 114, 214, 314, 414, 514, 614 714, 814) is fixed.

13. The handle (12) according to claim 11 or 12, wherein the proximal end (56) of the handle (12) comprises a chamfered surface (60).

14. The handle (12) according to claim 13, wherein the handle (12) has a longitudinal length extension (64) and a cross-sectional area (62) extending substantially perpendicular to the longitudinal length extension (64), and the chamfered surface (60) and the cross-sectional area (62) define an angle α from about 15° to about 30°, preferably from about 18° to about 28°, further preferably about 25°.

15. A personal care implement (10) comprising a head (16), a handle (12) with a connector (14, 114, 214, 314, 414, 514, 614 714, 814) according to any of claims 11 to 14, the head (16) being repeatedly attachable to and detachable from the handle (12) via the connector (14, 114, 214, 314, 414, 514, 614 714, 814).
